# EUROPEAN PATENT SPECIFICATION

(11) **EP 2 161 229 B1**
(45) Date of publication and mention of the grant of the patent: **29.09.2010**
(21) Application number: 08015743.1
(22) Date of filing: 06.09.2008
(51) Int. Cl.: B65G 63/00

(54) **Method of transfer of coal at port terminal**
Verfahren zum Kohlentransport an einem Kanalende
Procédé de transfert de charbon dans un terminal portuaire

(43) Date of publication of application: 10.03.2010
(73) Proprietor: Smirnov, OLeksandr, Doneckaia oblatsj., 86114 (UA); Starikov, Oleksandr, Doneck, 83000 (UA); Nusenkis, Viktor, Moscow 107045 (RU); Stepanovs, Olegs, Riga 1010 (LV); Pashuta, Valerijs, Ventspils 3602 (LV); Dementjeva, Tatjana, Doneck, 83055 (UA)
(72) Inventor: Smirnov, Oleksandr, Doneckaia oblastj, 86114 (UA); Starikov, Oleksandr, Doneck, 83000 (UA); Nusenkis, Viktor, Moscow, 107045 (RU); Stepanovs, Olegs, 1010 Riga (LV); Pashuta, Valerijs, 3602 Ventspils (LV); Dementjeva, Tatjana, Doneck, 83055 (UA)
(74) Representative: Zvirgzds, Arnolds

(56) References cited:
- DE-C- 493 773
- JP-A- 59 217 530
- JP-A- 59 230 924
- JP-A- 60 148 804

## Description

The invention relates to the field of loading-and-unloading operations at a port terminal, namely, to unloading of coal from open cars of a railway train and to conveyance thereof to a storehouse, or without a step of placing at storehouse directly to a pier for ship loading.

### Background of Invention

A technological process of loading operations is based on the level reached due to the scientific and technological development, engineering capabilities of construction engineering facilities and lift-and-carry machines which may be really used. At the same time the available technology specifies the requirements for port's berthing facilities, storage facilities, loading areas, location and arrangement thereof, and the requirements for a type, parameters and a number of required lift-and-carry machines and control systems. The development of a process layout is a key step in a design and development, which mostly determines the efficiency thereof under given conditions.

Presently coal conveyance, a transfer thereof from one type of a transport to another one and storage thereof are connected with significant losses. Coal keeping at ground storage leads to ash content increase, and also blowing out, washing out and self-inflammation of coal occur. This results in annual loss of approximately 7 % of the amount of coal withdrawn and in heavy pollution of surrounding area and air basin. Proper coal stockpiling and storage, control of quantitative and qualitative losses are the main objectives of coal transfer facilities.

It is known in the prior art a method of coal transfer of from cars of a railway train to a ship without a step of placing of coal at a storehouse by equipping a complete transportation chain to connect a coal unloading place with a place of loading according to description of JP Patent 59217530, B65G 63/00, 1984 taken as a prototype. The disadvantage of this known method is in that for ship loading the railway trains with the same brand of coal, are classified, lined-up in a railway siding and upon a ship arrival the railway trains one by one are spotted to a side tippler, and then coal is loaded directly to the ship, that is not convenient as regards to idling of a train, for which siding lines are required for accumulation of a necessary amount of coal. This loading pattern is not efficacious enough since coal transfer process is an occasional one.

### Summary of Invention

According to the present invention there is provided a method of transfer of coal from a railway train to a ship by means of transfer facilities including means of coal unloading from open wagons of a railway train, processing, storage and loading thereof to ships and motor transport, with provision of a continuous loading process with maximum automation of all steps, preservation of qualitative natural properties of coal while achieving high ecological safety.

The technical result lies in a significant improvement of environment, maximum capacity, the increase of carrying capacity of a terminal, convenience and safety of the process.

To achieve the said technical result in the method of transfer of coal from a railway train to a ship comprising unloading of open wagons by a side tippler, processing and handling and conveyance of coal through the terminal area to a pier, loading by a ship loader to ships during continuous loading of coal, according to the present invention, ship loader parameters are optimized with respect to all steps of technological process, type and size of ships and loading-and-unloading equipment with the provision of guaranteed capacity of a terminal by means of a process line that provides coal conveyance at port comprising series and parallel belt conveyors of a relevant capacity with movement speed adjustment, with manipulation of coal flows through a main distributing tower in various directions simultaneously providing strict configuration of a mass flow through a remote controlled transfer towers; coal is subjected to crushing by means of a hammer crusher and a roll crusher with the adjustment of crushing parameters, and to removal of ferromagnetic inclusions by means of a belt magnetic separators; all operations of reloading, storage and conveyance of coal are performed in enclosed spaces.

In winter the cars with coal are heated by infrared gas burners in defrosting housing when the railway train is moving to the side tippler.

Furthermore, a sequence of operations, capacity and speed of coal flows through a main distributing tower provided with seven belt conveyors converging at a different levels are preset by a set of technological programs in a remote control system; a recirculation of consolidated coal at a storehouse is realized through the main distributing tower, and a sampling is effected at sample stations on belt conveyors and in a pier tower operating in an automated mode.

The method includes also dust collection by providing of all points of reloading along the technological conveyor line with dust suppression systems with return of dust to a mass of coal taken away.

The discharge of coal to motor transport is provided at one of transfer towers.

Protection of all parts of technological process line is provided by design and arrangement of the said parts so that to avoid water ingress during bad weather or during cleaning and at places of flooding a reliable drainage system is provided.

Coal loading to ships is performed by means of ship loaders, which are handling moored ships from both sides of a pier equipped by a laser system for ship positioning during mooring thereof.

The claimed method of coal transfer differs from the known methods by a set of technological operations and elements thereof, quantitative composition of the technological line, the choice of parameters of transfer equipment and engineering facilities, determination of composition and a sequence of operations. The originality of the method lies in the ecological safety of coal transfer in terms of environment while maintaining coal qualitative composition. Coal crushing which allows obtaining the required granulometric composition, removal of ferromagnetic inclusions, coal storage conditions at the storehouse, performing of all operations of reloading and conveyance in enclosed spaces allows coal to preserve its qualitative natural properties due to exclusion of environmental effect. The equipment of all points of reloading with dust separation systems capable of returning of coal dust to the mass of coal taken away in enclosed spaces permits avoiding pollution of water and air basins.

The equipment of belt conveyors and the pier tower by sample station, operating in an automatic mode permits a customer to be informed about the quality of a cargo in due time.

The defrosting by means of infrared gas burners provides the preservation of railway trains, continuity of unloading process in any time of year without decreasing the capacity.

The remote control of coal flows which allows the capacity of the belt conveyors to be changed depending upon ship parameters and permits providing of regular loading of the ship, minimum labor costs and time for uninterrupted loading and unloading operations.

The use of ship loaders, which are capable to handle ships from both sides of the pier allows increasing the capacity of ship loading.

Laser ship positioning control system during their mooring provides a safety of maritime traffic and hydraulic-engineering structures.

Due to the use of a process control system and minimum of engineering staff a human factor is substantially minimized.

### Detailed Description of Preferred Embodiment of Invention

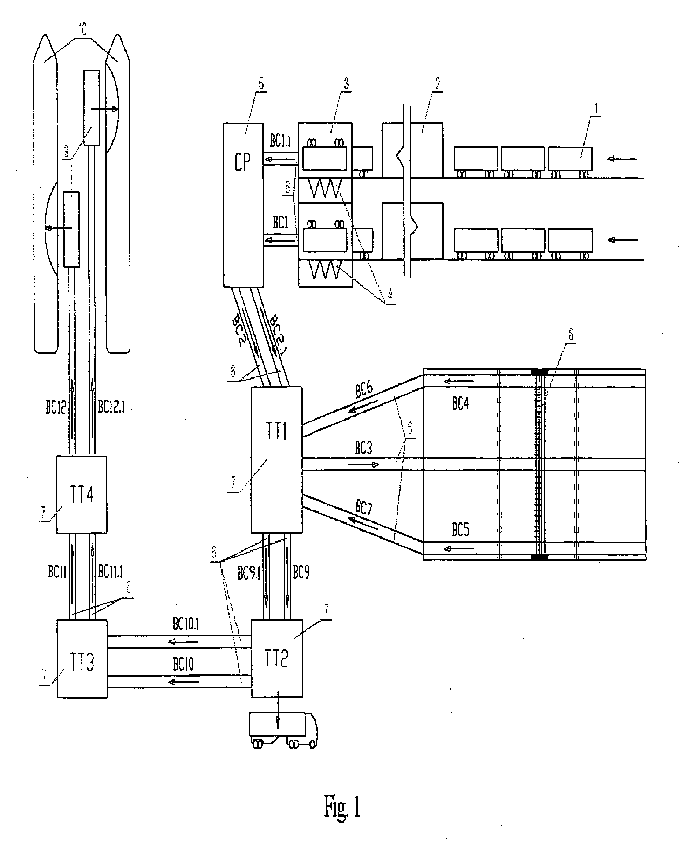

The embodiment of the claimed method may be illustrated by way of schematic step-to-step flowchart (Fig.1), which determines the set and the sequence of operations of technological process of transfer operations and types of machines and technological equipment used. The proposed method of loading operations specifies the operation of each technological line separately. Operations and steps of the transfer process are the following: main operations, technological operations, which are directly connected with the conveyance of a cargo, and secondary ones, which appear to be the actions accompanying the technological process required according to the specifications of work.

Coal is delivered to the terminal in open cars of a railway train 1 along two branch lines. In winter coal is frozen to car walls. To defrost it along the line of march through the territory of the terminal the railway train (up to 30 cars) is going through a defrosting housing 2 equipped by infrared gas burners directed to car walls providing the so-called "film heating" (coal is separated from heated walls). The process is performed on the run during 40 minutes depending upon the environment temperature. Heating cycle corresponds to the capacity of reloading - up to 24 cars per hour. Open cars with coal are unloaded by means of side tipplers (ST) 3 with the capacity of 24 cars/hour, which provide a continuous process of unloading in any season. There are provided also: a service hoist (SH), two side tipplers, weigh-bridge for rail cars (WB), car vibrators (for car cleaning), two hammer crushers over bin grates, two railway train positioners (TP) for car positioning, remote controlled hydraulic breaker (HB), hydraulic wheel stoppers (WB), which stop railway train in any position.

Except for uncoupling performed by an operator, a process of unloading is fully automated. For the following operations the railway train is operated by a positioner, which pulls a loaded car to a cradle of a tippler, at the same time releasing the empty car from the side tippler, and together with it the positioner stops at final position of the loaded car in the side tippler, where it is fixed.

Upon uncoupling of the loaded car the positioner continues movement with the emptied car and connects it to an emptied railway train pushing the last to the length of a car. Emptied cars are stopped by means of wheel stoppers (WS), the positioner is disconnected and returns to the loaded railway train. The side tippler turns the car to 170° for unloading, activates the car vibrator for car cleaning and then places it to the initial position. This cycle is repeated.

The capacity of the side tippler is 24 cars/hour. Carrying capacity - 1700 ton/hour. Coal is unloaded to a bin on steel grates and is crushed by means of the hammer crusher, which crushes lumps of consolidated coal into pieces with particle-size fractions up to 300 mm. Then by means of a vibrating feeder (VF) 4 coal is fed from the bin to a belt conveyor (BC) is fed to a crushing plant (CP) 5 equipped with a shear roll crusher (SRC) and magnet separators (MS), which remove ferromagnetic inclusions.

A roll crusher (2 units) with replaceable crushing segments provides obtaining coal with required size grading composition. The roll crusher is capable of obtaining particle-size fractions of not more than 50 mm. Capacity of the roll crusher is 1800 ton/hour. Furthermore, it is possible to bypass crushing through a system of chutes and controlled gates.

Conveyor system connecting sites of unloading of cars, storehouse and loading of ships has totally 12 belt conveyors 6 (BC) with total length of 2.5 km, four transfer towers 7 (TT) with coated loading chutes and with a system of diverter gates (DG) in dust-proof casings. Diverter gates (DG) feed the material along the belt movement, and coated chutes having sufficient length serve for precise configuration of mass flow in a process conveyor line.

All reloading points along the process conveyor line are provided by dedusting equipment (DE) with the return of coal dust to a mass of coal taken away. All operations of reloading, storage and conveyance are performed in enclosed spaces. To prevent dust ingress, i.e. small particles of product spreading from the main flow into environment, dedusting equipment (DE) is provided in reloading points: side tippler facilities, from conveyors into crushing-and sorting facilities, from a conveyor to a conveyor, from a conveyor into a loading chute, furthermore, there is a suppression system by water (SSW) during summer period.

Storehouse premises comprise three sections 91.5 m in length, and is equipped with portal reclaimers (PR) 8, which are electrically interconnected with all unloading belt conveyors. Automatic control system provides optimal conditions for the operation of said portal reclaimers.

There have been determined the main factors that affect the process of coal transfer with the preservation of qualitative natural properties thereof. Proper stockpiling and storage of solid fuel, control of quantitative and qualitative losses are the main problems of coal storehouses. There are provided conditions for the preservation of coal characteristics: natural moisture content and granulometric composition. A temperature control is carried out constantly. When the temperature rises, coal which has been stored too long in a storehouse is transferred through the main transfer tower (TT-1). Selected number of series and parallel belt conveyors with the carrying capacity of 1800 and 3000 ton/hour provide simultaneous conveyance of coal at port from a crushing plant (CP) through the main transfer tower (TT-1) in various directions: TT-1 - a storehouse, the storehouse - TT-1 - TT-2, TT-3 and TT- 4 - to a ship, from a side tippler (ST) through the crushing plant (CP) or by-passing it - to TT-1 and further to the ship, the storehouse - TT-1- the storehouse ( recirculation). There is provided also coal unloading from TT-2 to motor transport.

Sampling devices operating in automatic mode are provided on belt conveyors and at a pier transfer tower. All belt conveyors operating in automatic mode capable of adjusting of speed are provided with belt scales (BS) and easily removed covers with inspection windows.

All buildings are equipped with a pneumatic pipeline system for dust suction by means of industrial vacuum-cleaners. Electrical equipment is partially embodied in explosion-proof version (depending on degree of explosion hazard).

A ship loader (SL) 9 with a swinging boom to control the point of loading provides the loading of ships 10 from both sides of the pier. The material is transferred from the pier conveyor through a belt-and-loop reloader to an upper part of a ship loader (SL). An unloading truck of the pier conveyor loads the conveyor - feeder, by means of which the material is fed to the center of rotation of the ship loader (SL). For unloading the material from the moving ship loader into a bulk hold a telescopic loading chute is used. Automatic remote control provides interaction of interaction between boom swing mechanisms of the ship loader (SL) and extension of a dumping pipe, ensures the ship loading gradually in layers along fore-and-aft axis. Steadiness of ship's draft increase and accuracy of its displacement along the pier are controlled automatically.

The ship loader (SL) has a design loaded capacity of 3000 tons of coal per hour with the provision of ship handling within the range of 12000 - 120000 deadweight.

All parts of constructions are designed and arranged so that avoid water ingress during bad weather or cleaning, and at places of flooding a safe drainage system is provided.

Interlocking and safety devices are provided to avoid congestion of the material. There is provided a fire alarm system connected to a dispatcher's console. Electrical equipment is partially embodied in explosion-proof version (depending on degree of explosion hazard).

Claimed structural layout of processing and handling equipment, automation of all operations allow substantial decreasing of transfer time, avoiding coal losses and polluting of water and air basins.

An up-to-date control system is capable of efficient control of an operating process, of providing an operative information interchange between a consigner, a railway, a port, a maritime administration, regulatory bodies, a ship owner and a consignee.

Purposeful specialization of the proposed transfer facilities enhances the efficiency of operations: labor efficiency and transport handling intensity. Claimed equipment facilities, all process operation in the aggregate allow achieving technical result according to the object of the present invention: providing a set of operations for coal unloading from open cars of a railway train, and loading thereof to ships with the provision a continuous loading process with maximum automation of all steps, preservation of qualitative natural properties of coal while achieving high ecological safety. In the course of design engineering and comparison of existing port transfer facilities with regard to a specialization of the transfer of one type of cargo - coal, an optimal variant has been accepted, the technical parameter of which is to provide an ecologically safe operating activities and maximum capacity while preserving original natural properties of the material.

## Claims

1. A method of coal transfer from cars of railway train to ships at port terminal, the method comprising: unloading of open cars by means of a side tippler, processing and handling and conveyance of coal through a terminal area to a pier, loading by means of a ship loader to ships during continuous coal loading, **characterized in that** the parameters of the ship loader are optimized with respect to all steps of a technological process, type and size of ships and loading-and unloading equipment with the provision of guaranteed capacity of a terminal, by means of a process line that provides coal conveyance at territory of port comprising series and parallel belt conveyors of a relevant capacity and adjusts the speed of movement of conveyers with movement speed adjustment with manipulation of coal flows through a main distributing tower in various directions, simultaneously providing strict configuration of a mass flow through a remote controlled transfer towers; furthermore coal is subjected to crushing by means of hammer crusher and a roll crusher with the adjustment of crushing parameters, and to removal of ferromagnetic inclusions by means of a belt magnetic separators; all operations of reloading, storage and conveyance of coal are performed in enclosed spaces.

2. A method according to claim 1, **characterized in that** in winter the cars with coal are heated by infrared gas burners in defrosting housing when the railway train is moving to the side tippler.

3. A method according to claim 1, **characterized in that** a sequence of operations, capacity and speed of coal flows through a main distributing tower in the main distributing tower provided with seven belt conveyors converging at a different levels, are preset by a set of technological programs in a remote control system.

4. A method according to claim 1, **characterized in that** a recirculation of consolidated coal at a storehouse is realized through the main distributing tower; and a sampling is effected at sample stations operating in an automated mode on belt conveyors and in a pier tower.

5. A method according to claim 1, **characterized in that** it includes dust collection by providing of all points of reloading along the technological conveyor line with dust suppression systems with return of dust to a mass of coal taken away.

6. A method according to claim 1, **characterized in that** the discharge of coal to motor transport is provided at one of transfer towers.

7. A method according to claim 1, **characterized in that** protection of all parts of technological process line is provided by design and arrangement of the said parts so that to avoid water ingress during bad weather or during cleaning, and at places of flooding a reliable drainage system is provided.

8. The method according to claim 1, **characterized in that** coal loading to ships is performed by means of ship loaders, which are handling moored ships from both sides of a pier equipped by a laser system for ship positioning during mooring thereof.

## Patentansprüche

1. Verfahren zum Kohleumschlag aus Wagen eines Eisenbahnzuges zu Schiffe an einem Hafenterminal, wobei das Verfahren enthaltet das Entladen von offenen Wagen mittels eines Seitensäufers, das Verarbeiten und das Handling und das Transport von Kohle durch einen Terminalbereich zu einen Kai, das Beladen mittels eines Schiffsbeladers zu Schiffe während kontinuierlichen Kohlebeladens, **dadurch gekennzeichnet, dass** die Parameter des Schiffsbeladers hinsichtlich allen Schritte eines technologischen Verfahrens, Art und Größe der Schiffe und Lade- und Löschgeräte unter dem Vorbehalt einer garantierten Kapazität eines Terminals, mittels einer Prozesslinie optimiert werden, die einen Kohleumschlag am Hafengebiet enthaltend Reihen- und Parallelbandförderer mit einer geeigneten Kapazität bietet und die Geschwindigkeit der Bewegung der Förderer mit einer Anpassung der Bewegungsgeschindigkeit mit Handhabung von Kohlenströmen durch eine Haubtverteilungsturm in verschieden Richtungen anpasst, und gleichzeitig strenge Anordnung eines Massenstromes durch eine ferngesteuerte Umschlagturm bietet; darüber hinaus wird Kohle einer Zerkleinerung mittels eines Hammerbrechers und eines Walzenbrechers mit der Einstellung der Parameter der Zerkleinerung, und einem Entfernen von ferromagnetischen Einschlüssen mittels eines Bandmagnetscheiders ausgesetzt; alle Operationen von Wiederverladung, Lagerung, und Transport von Kohle werden in geschlossenen Räumen durchgeführt.

2. Verfahren nach Anspruch 1, **dadurch gekennzeichnet, dass** im Winter die Wagen mit Kohle durch Infrarotgasbrenner in Gehäusen zum Abtauen beheizt, während der Eisenbahnzug nach den Seitensäufer fährt.

3. Verfahren nach Anspruch 1, **dadurch gekennzeichnet, dass** eine Betriebsablauf, Kapazität und Geschwindigkeit von Kohlenströmen durch eine Haubtverteilungsturm in die Haubtverteilungsturm enthaltend siebend auf veschiedenen Ebenen zusammenlaufenden Bandförderer von einem Satz von technologischen Programmen in einem Fernsteuersystem voreingestellt sind.

4. Verfahren nach Anspruch 1, **dadurch gekennzeichnet, dass** eine Rückführung von konsolidierte Kohle an einem Lager durch die Hauptverteilungsturm durchgeführt wird; und eine Probennahme an im automatischen Modus wirkenden Probenstationen auf Bandförderer und in einer Kaiturm durchgefüht wird.

5. Verfahren nach Anspruch 1, **dadurch gekennzeichnet, dass** das Verfahren eine Entstaubung beim Ausrüsten von allen Umladungstellen entlang die technologische Fördererlinie mit Staubunterdrückungssystemen aufweist, wodurch der Staub an eine weggenommene Kohlemass zurückgegeben wird.

6. Verfahren nach Anspruch 1, **dadurch gekennzeichnet, dass** an einer der Umschlagtürme die Abgabe von Kohle zu Motortransport durchgefüht wird.

7. Verfahren nach Anspruch 1, **dadurch gekennzeichnet, dass** ein Schutz von allen Teilen des technologischen Verfahrenslinie durch den Aufbau und die Anordnung dieser Teilen geliefert ist, um einen Wassereinbruch beim Schlechtwetter oder bei der Reinigung zu verhindern, und an Stellungen von Überschwemmung ein zuverlässig Entwässerungssystem geliefert ist.

8. Verfahren nach Anspruch 1, **dadurch gekennzeichnet, dass** das Kohlebeladen zu Schiffen mittels Schiffbeladern durchgeführt wird, die liegenden Schiffe an beide Seiten eines Kai ausgestattet mit einem Lasersytem zur Shiffspositionierung bei ihrem Anlegen bearbeiten.

## Revendications

1. Procédé de transfert de charbon à partir de wagons de train dans des navires à un terminal portuaire, le procédé comprenant : le déchargement de wagons ouverts au moyen d'un culbuteur latéral, le traitement, la manipulation et le transport du charbon à travers une zone terminale vers un quai, le chargement au moyen d'un chargeur de navires, sur des navires au cours d'un chargement continu de charbon, **caractérisé par le fait que** les paramètres du chargeur de navires sont optimisés par rapport à toutes les étapes d'un processus technologique, au type et à la dimension des navires et à l'équipement de chargement et de déchargement à la condition d'une capacité garantie d'un terminal, au moyen d'une ligne de traitement qui permet le transport du charbon sur un territoire du port comprenant des transporteurs à courroie en série et en parallèle d'une capacité appropriée et qui ajuste la vitesse du mouvement des transporteurs avec un ajustement de vitesse de mouvement avec une manipulation des flux de charbon à travers une tour de distribution principale dans diverses directions, en fournissant simultanément une configuration stricte d'un flux massique à travers des tours de transfert commandées à distance, le charbon étant de plus soumis à un broyage au moyen d'un broyeur à marteaux et d'un concasseur à cylindres avec l'ajustement de paramètres de broyage, et à une élimination des inclusions ferromagnétiques au moyen de séparateurs magnétiques à courroie, toutes les opérations de rechargement, de stockage et de transport de charbon étant réalisées dans des espaces fermés.

2. Procédé selon la revendication 1, **caractérisé par le fait qu'**en hiver les wagons avec le charbon sont chauffés par des brûleurs à gaz infrarouges dans un bâtiment de dégel quand le train se déplace jusqu'au culbuteur latéral.

3. Procédé selon la revendication 1, **caractérisé par le fait qu'**une séquence d'opérations, la capacité et la vitesse des flux de charbon à travers une tour de distribution principale dans la tour de distribution principale comportant sept transporteurs à courroie convergeant à différents niveaux, sont prédéfinies par un ensemble de programmes technologiques dans un système de commande à distance.

4. Procédé selon la revendication 1, **caractérisé par le fait qu'**un recyclage de charbon consolidé dans un entrepôt est réalisé à travers la tour de distribution principale, et un échantillonnage est réalisé à des stations d'échantillonnage fonctionnant dans un mode automatisé sur des transporteurs à courroie et dans une tour de quai.

5. Procédé selon la revendication 1, **caractérisé par le fait qu'**il comprend une collecte de poussière par l'équipement de tous les points de rechargement le long de la ligne de transporteur technologique en systèmes de suppression de poussière avec un retour de poussière à une masse de charbon enlevée.

6. Procédé selon la revendication 1, **caractérisé par le fait que** la décharge de charbon vers le transport motorisé s'effectue à l'une des tours de transfert.

7. Procédé selon la revendication 1, **caractérisé par le fait que** la protection de l'ensemble des parties de la ligne de traitement technologique est assurée par la conception et la disposition desdites parties de façon à éviter un afflux d'eau en cas de mauvais temps ou lors du nettoyage, et à des endroits inondables, un système de drainage fiable est disposé.

8. Procédé selon la revendication 1, **caractérisé par le fait que** le chargement de charbon dans les navires est réalisé au moyen de chargeurs de navire, qui chargent des navires amarrés des deux côtés d'un quai équipé d'un système laser pour le positionnement des navires lors de leur amarrage.
